Europäisches Patentamt

European Patent Office

Office européen des brevets

(19)

(11) Numéro de publication: **0 094 284**
**B1**

# (12) FASCICULE DE BREVET EUROPEEN

(45) Date de publication du fascicule du brevet:
**11.09.85**

(21) Numéro de dépôt: **83400833.6**

(22) Date de dépôt: **27.04.83**

(51) Int. Cl.⁴: **B 62 D 43/04**

(54) **Dispositif de verrouillage, notamment pour berceau de roue de secours.**

(30) Priorité: **06.05.82 FR 8207860**

(43) Date de publication de la demande:
**16.11.83 Bulletin 83/46**

(45) Mention de la délivrance du brevet:
**11.09.85 Bulletin 85/37**

(84) Etats contractants désignés:
**DE GB IT SE**

(56) Documents cités:
**EP - A - 0 001 725**
**EP - A - 0 003 267**
**FR - A - 1 551 853**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Calin, Phillipe, 21, rue G. Apollinaire,
F-78760 Pontchartrain (FR)**

EP 0 094 284 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

## Description

La présente invention a pour objet un dispositif de verrouillage pour berceau de roue de secours monté pivotant sous le plancher d'un véhicule automobile, le berceau étant susceptible d'être libéré de l'intérieur du véhicule automobile au moyen d'une commande reliée à un verrou.

On connait des dispositifs de retenue dans lesquels le verrou comprend un boîtier monté sous le plancher, un crochet de retenue du berceau et un crochet de sécurité, le berceau provoquant son verrouillage automatique par le crochet de retenue au cours de sa mise en place sous le plancher. Un tel type de dispositif est notamment décrit et représenté dans la demande de brevet français n° 7 802 471 publiée sous le n° 2 415 708.

La présence du crochet de sécurité est due à des normes de sécurité qui prévoient un tel crochet afin d'éviter la libération accidentelle du berceau de la roue de secours en cas de manœuvre intempestive du conducteur du véhicule ou en cas de rupture du chrochet de retenue. On constate souvent que, après une utilisation normale du dispositif de retenue, lors du changement d'une roue du véhicule, le berceau reste maintenu uniquement par le crochet de sécurité mais n'est pas verrouillé en position par le crochet de retenue. Ce mauvais positionnement se produit généralement lorsque le conducteur n'a pas remonté le berceau avec une force suffisante pour engager le crochet de retenue et provoquer le verrouillage automatique de ce dernier et lorsque le conducteur n'a pas procédé au verrouillage manuel du crochet de retenue.

La présente invention a pour but de remédier à cet inconvénient majeur et propose à cet effet un dispositif de verrouillage du type mentionné plus haut caractérisé en ce que le verrou comporte des moyens de retenue du crochet de sécurité en position effacée lorsque le berceau est en position libérée, le relâchement desdits moyens de retenue étant commandé par le verrouillage automatique du berceau par le crochet de retenue.

On comprend que grâce à une telle caractéristique, il est impossible, lors de la manœuvre de remise en place du berceau, de voir ce dernier ne reposer que sur le crochet de sécurité sans que le verrouillage principal et automatique par le crochet de retenue ne soit assuré.

Selon une autre caractéristique de l'invention, lesdits moyens de retenue sont constitués par des moyens de butée escamotables coopérant avec le levier de sécurité pour s'escamoter automatiquement lorsque ce dernier est amené dans sa position effacée, l'escamotage desdits moyens de butée étant commandé automatiquement lors du verrouillage du berceau par ledit crochet de retenue.

L'invention trouve notamment son application dans un dispositif de retenue dans lequel le verrou comprend:

— un boîtier en forme de chape.

— un crochet de retenue monté pivotant autour d'un premier axe monté dans ladite chape.

— un cliquet, monté pivotant sur un deuxième axe monté sur ladite chape, ledit cliquet et ledit crochet de retenue étant sollicités bord à bord en contact l'un contre l'autre par un ressort de traction accroché dans deux encoches formées sur ledit crochet de retenue et ledit cliquet, lesdits bords en contact présentant deux décrochements complémentaires qui coopèrent pour verrouiller le crochet de retenue par le cliquet dans la position correspondant au verrouillage du berceau, ledit cliquet étant relié directement à ladite commande, et un crochet de sécurité monté sur un troisième axe, monté dans la chape, autour duquel il est susceptible de pivoter depuis une position de sécurité dans laquelle une encoche formée sur le crochet de sécurité emprisonne le berceau dans une fente formée dans les ailes de ladite chape, vers sa position effacée dans laquelle ledit berceau est libre de sortir de ladite fente, ledit crochet de sécurité étant muni d'un ressort de rappel le sollicitant en permanence vers ladite position de sécurité.

Dans cette application particulière, lesdits moyens de butée escamotables sont constitués par un premier ergot formé sur ledit cliquet et par un deuxième ergot formé par ledit levier de sécurité, ledit premier ergot coopérant avec ledit second ergot fermé par le levier de sécurité pour empêcher tout pivotement de ce dernier vers ladite position de sécurité lorsqu'il occupe ladite position effacée et que ledit berceau est en position libérée.

Une telle caractéristique permet de réaliser de façon simple un dispositif conforme aux enseignements de la présente invention sans augmenter le nombre des composants du verrou, ni compliquer exagérément leur fabrication.

On décrira maintenant à titre d'exemple un mode de réalisation de la présente invention en se référant aux dessins annexés dans lesquels:
— la figure 1 est une vue en coupe, selon la figure 1-1 de la figure 2, d'un dispositif de verrouillage réalisé conformément aux enseignements de la présente invention,
— la figure 2 est une vue en coupe, selon la ligne 2-2 de la figure 1, et
— la figure 3 est une vue de dessus du dispositif représenté à la figure 1.

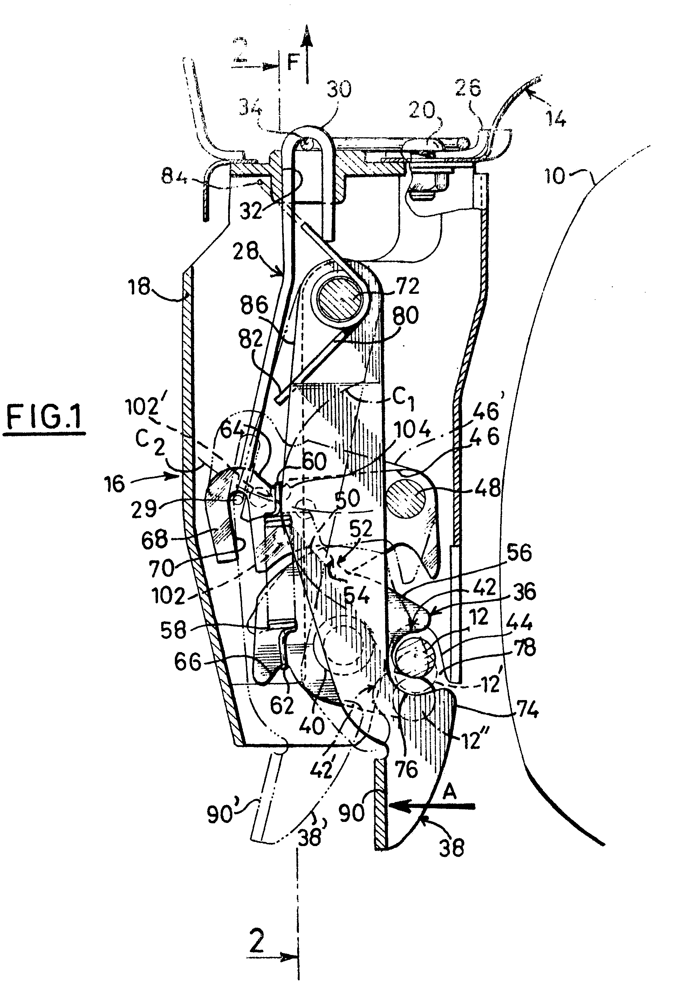

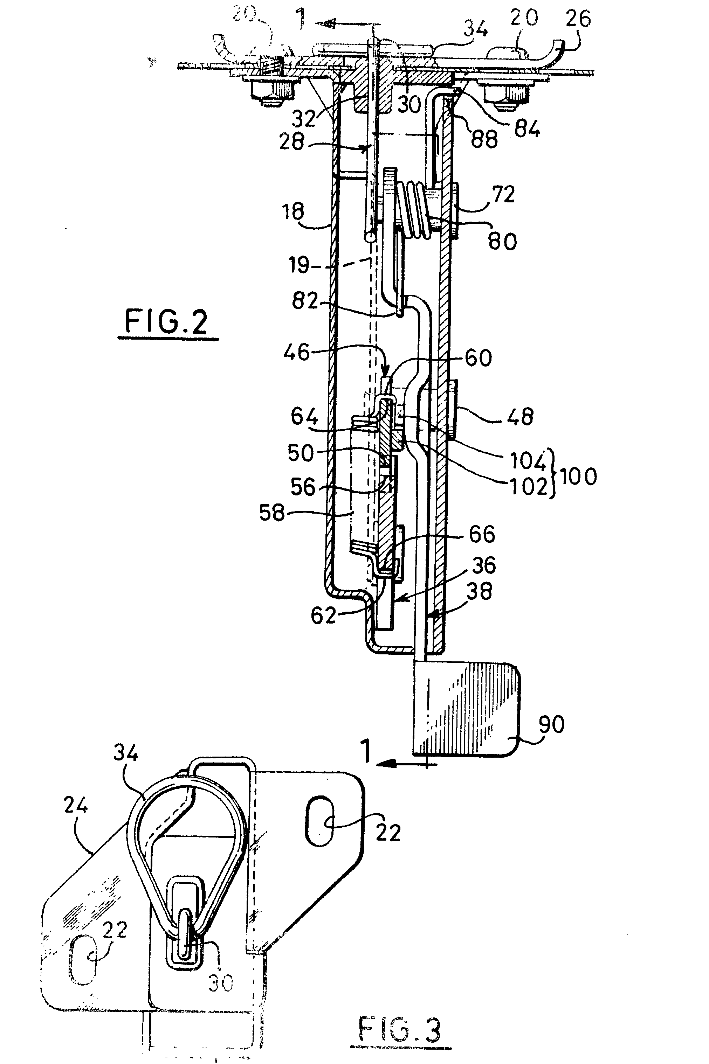

En se référant à la figure 1 on reconnait le profil d'une roue de secours 10 maintenue en place dans un berceau 12, dont on n'a représenté que la portion extrême prévue pour coopérer avec le dispositif de retenue objet de la présente invention. Le berceau 12 est monté pivotant sous le plancher 14 du véhicule. Un tel type de berceau et son articulation sont représentés plus en détails aux figures 1 et 2 du FR-A 2 415 708 mentionné plus haut, à la description de laquelle on peut également se référer à titre d'exemple.

Le dispositif de retenue comprend un verrou 16 dont le boitier 18 en forme de chape est réalisé en tôle pliée et est fixé au plancher 14 du véhicule au moyen de deux vis 20 montées dans des ouvertures 22 formées dans la plaque supérieure 24 du boîtier 18. Une plaque de renfort 26 est interposée entre les têtes des vis 20 et la tôle constituant le plancher 14.

La commande du dispositif de verrouillage est assurée au moyen d'une tirette 28 dont l'extrémité supérieure coudée 30 coulisse dans une ouverture 32 du corps 18 du verrou et est accessible de l'intérieur du véhicule au moyen d'un anneau 34 qui est enfilé dans l'extrémité supérieur coudée 30. L'anneau 34 repose sur la plaque support 26 et est généralement accessible depuis l'intérieur du coffre à bagages du véhicule.

Le verrou 16 comprend également un crochet de retenue 36 du berceau 12 et un crochet de sécurité 38. Le crochet de retenue 36 est monté pivotant sur un premier axe 40 monté sur une paroi centrale 19 du boîtier en forme de chape 18. Le crochet de retenue 36 est une pièce en tôle découpée présentant à sa partie inférieure une encoche 42 de profil semi-circulaire qui coopère avec une fente 44 formée dans les ailes latérales de la chape 18 pour emprisonner le berceau 12 qui dans le mode de réalisation représentée est réalisé en fil métallique de section cylindrique. La fente 44 est ouverte vers la partie inférieure du verrou afin de permettre l'introduction ou la sortie du berceau 12.

Lorsque le berceau occupe sa position normale, c'est-à-dire lorsqu'il est verrouillé par le crochet de retenue 36, il repose sur le profil de l'encoche 42 formée dans le crochet de retenue 36.

Le crochet de retenue 36 est maintenu en position verrouillée par un cliquet 46. Le cliquet 46 est monté pivotant sur un deuxième axe 48 monté dans la chape 18. Le bord inférieur 50 du cliquet 46 présente un décrochement 52 qui coopère avec un décrochement complémentaire 54 formé par le bord supérieur 56 du crochet de retenue 36 pour verrouiller ce dernier dans la position correspondant au verrouillage du berceau 12. Les bords 50 et 56 du cliquet 46 et du crochet de retenue 36 sollicités en contact l'un contre l'autre par un ressort de cliquet 58 constitué par un ressort hélicoïdal de traction dont les extrémités 60 et 62 sont fixées dans des encoches 64 et 66 formées sur le cliquet 46 et le crochet de retenue 36, respectivement. L'extrémité libre 68 du cliquet est munie d'une fente 70 dans laquelle est reçue l'extrémité inférieure coudée 29 de la tirette 28. Le cliquet 46 est ainsi reliée à la tirette 28, son pivotement autour de l'axe 48 pouvant être provoque par une action de l'opérateur sur la commande manuelle constituée par la tirette 28.

Le crochet de sécurité 38 est monté pivotant dans la chape 18 au moyen d'un troisième axe 72 monté dans celle-ci. L'extrémité inférieure 74 du crochet de sécurité 38 située à l'opposé de l'axe 72 est munie d'une encoche 76 en arc de cercle qui coopère avec la fente en demi-cercle 44 formée dans la chape 18 pour emprisonner le berceau 12 lorsque le crochet de sécurité 38 est dans sa position normale de sécurité représentée à la figure 1. Dans cette position de sécurité, on constate en effet que le berceau est emprisonné dans l'espace 78 délimité par la fente 44 et l'encoche 76 dont il ne peut échapper même en cas de pivotement accidentel ou en cas de rupture du crochet de retenue 36. Le crochet de sécurité est muni d'un ressort de rappel 80 constitué par un ressort spirale enroulé autour de l'axe 72 et dont les extrémités 82 et 84 prennent appui d'une part sur le bord latéral 86 du crochet de sécurité 38 et d'autre part dans un trou 88 formé dans la chape 18.

Le crochet de sécurité 38 est susceptible de pivoter autour de son axe 72 depuis la position de sécurité dans laquelle il est représenté aux figures 1 et 2 vers sa position effacée représentée en traits mixtes à la figure 1.

Ce pivotement peut être provoqué en agissant sur une patte 90, formée à l'extrémité libre 74 du crochet 38, à l'encontre de l'effort élastique exercé par le ressort de rappel 80.

Conformément à la présente invention, le verrou 16 comporte des moyens de retenue 100 prévus pour assurer le maintien du crochet de sécurité 38' dans sa position effacée lorsque le berceau est en position libérée. Les moyens de retenue sont constitués par des moyens de butée escamotables comprenant un premier ergot 102 sur le cliquet 46 et un deuxième ergot 104 formé sur le levier de sécurité 38. Les ergots 102 et 104 sont en forme de pions cylindriques venus de matière avec le cliquet 46 et le levier de sécurité 38 respectivement. Comme on peut le constater à la figure 2, les ergots 102 et 104 sont formés sur les surfaces en vis-à-vis du cliquet 46 et du levier de sécurité 38 et sont susceptibles de coopérer entre eux lors du fonctionnement du verrou d'une façon qui sera décrite plus loin.

A la figure 1, on a également représenté en traits mixtes les positions occupées par le cliquet 46 et le crochet de retenue 36 lorsque le berceau est en position déverrouillée.

Lorsque le conducteur du véhicule désire provoquer la libération du berceau 12 de la roue de secours, il doit commander le déverrouillage du verrou 16. Pour ce faire, le conducteur tire la tirette 28 logée dans le coffre suivant la flèche F au moyen de l'anneau 34.

Au cours de la manœuvre, la tirette coulisse dans l'ouverture 32 et l'extrémité inférieure coudée 29 se déplace verticalement dans la direction de la flèche F et provoque ainsi le pivotement du cliquet 46 autour de son axe 48. Le cliquet pivote ainsi depuis sa position verrouillée dans laquelle les décrochements 52 et 54 coopèrent entre eux vers sa position déverrouillée 36, représentée à la figure 1, ce pivotement s'effectuant à l'encontre de l'effort élastique exercé par le ressort de cliquet 58. La position déverrouillée du cliquet 36 correspond au désengagement du décrochement 52 d'avec le décrochement complémentaire 54 formé sur le crochet de retenue. Dès cet instant, les décrochements 52 et 54 ne coopèrent plus entre eux et le crochet de retenue 36 est libre de pivoter autour de son axe dans le sens des aiguilles d'une montre. Le crochet de retenue 36 pivote autour de son axe 40 sous l'effet du poids de la roue de secours supporté par le berceau. Lors de ce pivotement, le berceau 12 se déplace verticalement vers le bas dans la fente 44 jusqu'à ce qu'il vienne en appui sur l'encoche 76 formée sur le crochet de sécurité 38 et occupe la position 12' représentée en traits mixtes à la figure 1.

Pour provoquer la libération complète du berceau 12, le conducteur doit agir sur le crochet de sécurité 38. Pour ce faire, le conducteur agit sur la patte 90 dans la direction indiquée par la flèche A. En pivotant depuis sa position de sécurité (38) vers sa position effacée (38'), le levier de sécurité libère le berceau 12 qui n'est plus emprisonné dans la fente 14 et qui descend verticalement entrainant le crochet de retenue 36 en pivotement jusqu'à ce que ce dernier occupe sa position déverrouillée finale (36'). Dans cette position, l'encoche semi-circulaire 42 est orientée vers le bas et le berceau 12 est libre de continuer sa descente verticale depuis la position intermédiaire 12" représentée en traits pointillés à la figure 1. Dans cette position la roue de secours est accessible au conducteur du véhicule.

On constate que lors du déverrouillage, le premier ergot 102 formé sur le cliquet 46 se déplace sur une première trajectoire circulaire $C_1$ autour de l'axe 48, depuis sa position verrouillée (102) vers sa position déverrouillée (102').

De la même façon, le deuxième ergot 104 formé sur le crochet de sécurité 38 se déplace sur une seconde trajectoire $C_2$, autour de l'axe 72 depuis sa position dite de sécurité (104), correspondant à la position de sécurité du crochet 38 vers une position effacée (104') correspondant à la position effacée (38') du crochet de sécurité 38'.

Conformément à la présente invention, le premier ergot 102 doit se trouver sur la trajectoire $C_2$ du premier ergot lorsque le cliquet 36 est dans sa position déverrouillée (36). Grâce à une telle disposition, le deuxième ergot 104 vient coopérer avec le premier ergot 102' lors du pivotement du levier de sécurité 38. Lorsque l'ergot 104 vient buter sur l'ergot 102, et que l'on continue d'agir sur la patte 90, le cliquet 36 pivote autour de son axe à l'encontre de l'effort élastique exercé par le ressort de cliquet 58 pour permettre l'escamotage du premier ergot 102' par le second ergot 104, le premier passant par dessus le second et permettre ainsi au crochet 38 de pivoter jusqu'à sa position effacée 38'. Dans cette position, l'ergot 104' est en appui sur l'ergot 102' et tout pivotement du crochet de sécurité 38 est empêché par les moyens de retenue ainsi définis.

Lorsque le conducteur désire remettre la roue de secours en position sous le plancher du véhicule, il fait pivoter le berceau 12, et l'extrémité de ce dernier se déplace verticalement vers le haut en direction de la fuite 44 jusqu'à ce qu'il vienne occuper à nouveau la position 12". Dans cette position, le berceau 12" entre en contact avec l'encoche 42' formée dans le crochet de retenue 36'. En continuant d'agir sur le berceau 12, le conducteur provoque la rotation du crochet 36' dans le sens inverse des aiguilles d'une montre jusqu'à ce qu'il vienne occuper à nouveau sa position verrouillée (36). Dès que cette position est atteinte, le cliquet 46 pivote à son tour vers sa position verrouillée (46) dans laquelle les deux décrochements 52 et 54 coopèrent pour verrouiller le crochet de retenue 36. Lorsque le cliquet 46 pivote depuis sa position déverrouillée (46') vers sa position verrouillée (46), le premier ergot 102 se déplace sur la trajectoire $C_1$ dans le sens des aiguilles d'une montre vers sa position verrouillée 102. Lors de ce déplacement, le premier ergot s'efface progressivement de devant le deuxième ergot 104 jusqu'à venir occuper sa position verrouillée (102) dans laquelle il n'est plus situé sur la trajectoire $C_2$ de l'ergot 104. On comprend que le crochet de sécurité 38' n'est plus alors retenu en position effacée et est donc libre de pivoter automatiquement vers sa position de sécurité 38 sous l'action du ressort de rappel 80.

Si au cours de la manœuvre de verrouillage, le conducteur ne relève pas suffisamment le berceau 12 jusqu'à la position dans laquelle il est verrouillé automatiquement en position par le crochet de retenue 36 et le cliquet 46, le relâchement automatique des moyens de retenue du crochet de sécurité 38 n'est pas commandé par la rotation complète du cliquet 46 et le berceau retombe à terre sans être retenu par le crochet de sécurité 38. Le conducteur doit réitérer sa manœuvre jusqu'à obtenir le verrouillage automatique du berceau 12 par le crochet de retenue 36.

On comprend que, conformément à la présente invention, les moyens de butée escamotable constitués par les ergots 102 et 104 coopèrent avec le crochet de sécurité 38 pour s'escamoter automatiquement lorsque ce dernier est amené dans sa position effacée, l'escamotage des moyens de butée étant commandé automatiquement par le verrouillage du berceau 12 par le crochet de retenue 36.

L'invention n'est pas limitée au mode de réalisation qui vient d'être décrit, les ergots pouvant par exemple être formés sur le crochet de sécurité et sur le crochet de retenue. De même l'invention est applicable à un dispositif dans lequel la tirette 28 commande simultanément le pivotement des crochets de retenue et de sécurité.

## Revendications

1. Dispositif de verrouillage, notamment pour berceau (12) de roue de secours monté pivotant sous le plancher (14) d'un véhicule automobile, le berceau étant susceptible d'être libéré de l'intérieur du véhicule automobile au moyen d'une commande (28 – 34) reliée à un verrou (16) comprenant un boîtier (18) monté sous le plancher, un crochet de retenue (36) du berceau (12) et un crochet de sécurité (38), ledit berceau provoquant son verrouillage automatique par le crochet de retenue au cours de sa mise en place sous le plancher, caractérisé en ce que ledit verrou (16) comporte des moyens de retenue (100) dudit crochet de sécurité (38) en position effacée lorsque le berceau est en position libérée, le relâchement desdits moyens de retenue (100) étant commandé par le verrouillage automatique du berceau (42) par ledit crochet de retenue (36).

2. Dispositif selon la revendication 1 caractérisé en ce que lesdits moyens de retenue (102—104) sont constitués par des moyens de butée escamotables coopérant avec ledit crochet de sécurité (38) pour s'escamoter automatiquement lorsque ce dernier est amené dans sa position effacée, l'escamotage desdits moyens de butée étant commandé automatiquement par le verrouillage du berceau (12) par le crochet de retenue (36).

3. Dispositif selon l'une des revendications 1 ou 2 dans lequel ledit verrou comprend:

— un boitier (18) en forme de chape,
— un crochet de retenue (36) monté pivotant autour d'un premier axe (40) monté sur ledit boîtier,
— un cliquet (46), monté pivotant sur un deuxième axe (72) monté sur ledit boîtier (18), ledit cliquet (46) et ledit crochet de retenue (36) étant sollicités bord à bord (50, 56) en contact l'un contre l'autre par un ressort de cliquet (58), lesdits bords en contact présentant deux décrochements complémentaires (54, 56) qui coopèrent pour verrouiller le crochet de retenue (36) par le cliquet (46) dans la position correspondant au verrouillage du berceau, ledit cliquet (46) étant relié directement à ladite commande (28).
— et un crochet de sécurité (38) monté sur un troisième axe (72), monté dans le boîtier, autour duquel il est susceptible de pivoter depuis une position de sécurité dans laquelle une encoche (76) formée sur le crochet de sécurité (38) emprisonne le berceau (12) dans une fente (44) formée dans les ailes de ladite chape, vers sa position effacée dans laquelle ledit berceau est libre de sortir de ladite fente (44), ledit crochet de sécurité étant muni d'un ressort de rappel (90) le sollicitant en permanence vers ladite position de sécurité, caractérisé en ce que lesdits moyens de retenue (102—104) sont formés d'une part (104) sur ledit crochet de sécurité (38) et d'autre part (102) sur ledit cliquet (46).

4. Dispositif selon la revendication 3 prise en combinaison avec la revendication 2 caractérisé en ce que lesdits moyens de butée escamotables comprennent un premier ergot (102) formé sur ledit cliquet (46) et un deuxième ergot (104) fermé par ledit crochet de sécurité (38), ledit premier ergot (102) coopérant avec ledit second ergot (104) fermé par le crochet de sécurité (38) pour empêcher tout pivotement de ce dernier vers ladite position de sécurité, lorsqu'il occupe ladite position effacée et que ledit berceau est en position libérée.

5. Dispositif selon la revendication 4 caractérisé en ce que ledit premier ergot (102) fermé sur ledit cliquet se déplace sur une première trajectoire circulaire $(C_1)$ depuis une position verrouillée dans laquelle lesdits décrochements complémentaires (52, 54) coopèrent entre eux vers une position déverrouillée dans laquelle lesdits décrochements ne coopèrent plus et dans laquelle ledit crochet de retenue (36) est libre de pivoter autour de son axe, ledit deuxième ergot (104) se déplaçant sur une seconde trajectoire circulaire $(C_2)$ depuis une position de sécurité correspondant à ladite position de sécurité du crochet de sécurité vers une position effacée correspondant à ladite position effacée du crochet de sécurité ledit premier ergot (102) étant situé sur ladite seconde trajectoire $(C_2)$ lorsque le cliquet (46) occupe ladite position déverrouillée.

6. Dispositif selon la revendication 5 caractérisé en ce que ledit cliquet (46) est susceptible de pivoter autour de son axe (48) à l'encontre de l'effort exercé par ledit ressort de cliquet (58) pour permettre l'escamotage dudit premier ergot (102) par ledit second ergot (104) lors du pivotement dudit crochet de sécurité (38) depuis ladite position de sécurité vers ladite position effacée.

**Patentansprüche**

1. Verriegelungsvorrichtung, insbesondere für die Halterung (12) eines Ersatzrades, die schwenkbar unter dem Boden (14) eines Kraftfahrzeuges angeordnet ist, wobei die Halterung vom Inneren des Kraftfahrzeuges aus mittels einer Steuerung (28—34) freigegeben werden kann, die mit einem Riegel (16) verbunden ist, aufweisend ein Gehäuse (18), das am Boden angeordnet ist, einen Rückhaltehaken (36) für die Halterung (12) und einen Sicherheitshaken (38), wobei die Halterung ihre automatische Verriegelung durch den Rückhaltehaken während ihres Einschiebens unter den Boden bewirkt, dadurch gekennzeichnet, daß der Riegel (16) eine Rückhalteanordnung (100) für den Sicherheitshaken (38) in wirkungsloser Stellung aufweist, wenn die Halterung in freigegebener Stellung ist, wobei das Freigeben der Rückhalteanordnung (100) durch die automatische Verriegelung der Halterung (12) mittels des Rückhaltehakens (36) gesteuert wird.

2. Vorrichtung nach Anspruch 1, dadurch gekennzeichnet, daß die Rückhalteanordnung (102—104) aus einer Hakenanschlaganordnung besteht, die mit dem Sicherheitshaken (38) zusammenwirkt und sich automatisch zurückzieht, wenn letzterer in seine wirkungslose Stellung gebracht wird, wobei das Zurückziehen der Anschlaganordnung automatisch von der Verriegelung der Halterung (12) mittels des Rückhaltehakens (36) gesteuert wird.

3. Vorrichtung nach einem der Ansprüche 1 oder 2, wobei der Riegel folgende Teile aufweist:

— ein Gehäuse (18) in Haubenform,
— einen Rückhaltehaken (36) der schwenkbar um eine erste am Gehäuse angeordnete Achse (40) angeordnet ist,
— eine Klinke (46), die schwenkbar an einer zweiten am Gehäuse (18) befestigten Achse (48) angeordnet ist, wobei die Klinke (46) und der Rückhaltehaken (36) von einer Klinkenfeder (58) derart beaufschlagt werden, daß ihre Ränder (50, 56) einander berühren, wobei die sich berührenden Ränder zwei zueinander komplementäre Absätze (54, 56) aufweisen, die zusammenwirken um den Rückhaltehaken (36) mittels der Klinke (46) zu verriegeln in einer Stellung, die der Verriegelung der Halterung entspricht, wobei die Klinke (46) direkt mit der Steuerung (28) verbunden ist und
— einen Sicherheitshaken (38), der an einer dritten am Gehäuse befestigten Achse (72) angeordnet ist und um die er schwenken kann von einer Sicherheitsstellung aus, in der eine im Sicherheitshaken (38) angeordnete Aussparung (76) der Halterung (12) in einem Spalt (44) festhält, der in den Seitenteilen der Haube ausgebildet ist, zu seiner wirkungslosen Stellung, in der die Halterung aus dem Spalt (44) frei austreten kann, wobei der Sicherheitshaken mit einer Rückholfeder (90) versehen ist, der ihn ständig zur Sicherheitsstellung hin beaufschlagt, dadurch gekennzeichnet, daß die Rückhalteanordnung (102—104) zum einen Teil (104) am Sicherheitshaken (38) und zum anderen Teil (102) an der Klinke (46) angeordnet sind.

4. Vorrichtung nach Anspruch 3 in Kombination mit Anspruch 2, dadurch gekennzeichnet, daß die Hakenanschlaganordnung einen ersten Nocken (102) aufweist, der an der Klinke (46) ausgestaltet ist und einen zweiten Nocken (104), der an dem Sicherheitshaken (38) ausgestaltet ist, wobei der erste Nocken (102) mit dem zweiten am Sicherheitshaken (38) ausgestalteten Nocken (104) zusammenwirkt um eine Verschwenkung des letzteren in Richtung zur Sicherheitsstellung zu verhindern, wenn er die wirkungslose Stellung einnimmt und die Halterung in ihrer freigegebenen Stellung ist.

5. Vorrichtung nach Anspruch 4, dadurch gekennzeichnet, daß der erste an der Klinke ausgestaltete Nocken (102) sich entlang eines ersten kreisförmigen Weges ($C_1$) verschiebt, von einer Verriegelungsstellung, in der die zueinander komplementären Absätze (52, 54) untereinander zusammenwirken zu einer entriegelten Stellung, in der diese Absätze nicht mehr zusammenwirken und in der der Rückhaltehaken (36) frei um seine Achse schwenken kann, wobei der zweite Nocken (104) sich entlang eines zweiten kreisförmigen Weges ($C_2$) verschiebt von einer Sicherheitsstellung aus, die der Sicherheitsstellung des Sicherheitshakens entspricht zu einer wirkungslosen Stellung, die der wirkungslosen Stellung des Sicherheitshakens entspricht, wobei der erste Nocken (102) sich auf dem zweiten Weg ($C_2$) befindet, wenn die Klinke (46) ihre entriegelte Stellung einnimmt.

6. Vorrichtung nach Anspruch 5, dadurch gekennzeichnet, daß die Klinke (46) um ihre Achse (48) verschwenkt werden kann unter der Einwirkung der von der Klinkenfeder (58) ausgeübten Kraft um ein Zurückziehen des ersten Nockens (102) durch den zweiten Nocken (104) während des Verschwenkens des Sicherheitshakens (38) von der Sicherheitsstellung zur wirkungslosen Stellung zu ermöglichen.

## Claims

1. A locking device, in particular for the cradle (12) for a spare wheel, which is mounted pivotally under the floor (18) of a motor vehicle, the cradle being capable of being freed from the interior of the motor vehicle by means fo a control arrangement (28—34) connected to a lock (16) comprising a housing (18) mounted under the floor, a retaining hook member (36) for retaining the cradle (12) and a safety hook member (38), said cradle causing automatic locking thereof by the retaining hook member when it is set in position under the floor, characterised in that said lock (16) comprises retaining means (100) for retaining said safety hook member (38) in the inoperative position when the cradle is in the freed position, release of said retaining means (100) being controlled by automatic locking of the cradle (12) by said retaining hook member (36).

2. A locking device according to claim 1, characterised in that said retaining means (102—104) comprise retractible stop means co-operating with said safety hook member to be automatically retracted when the latter is moved into its inoperative position, retraction of said stop means being automatically controlled by locking of the cradle (12) by the retaining hook member (36).

3. A device according to one of claims 1 or 2 wherein said lock comprises:

— a housing (18) in the form of an enclosing cover structure,
— a retaining hook member (36) which is mounted pivotally about a first spindle (40) mounted on said housing,
— a pawl (46) which is mounted pivotally on a second spindle (48) mounted on said housing (18), said pawl (46) and said retaining

hook member (36) being urged into edge to edge (50, 56) contact with each other by a pawl spring (58), said contacting edges having two complementary recesses (54, 56) which co-operate to lock the retaining hook member (36) by means of the pawl (46) in the position corresponding to locking of the cradle, said pawl (46) being directly connected to said control arrangement (28), and

— a safety hook member (38) which is mounted on a third spindle (72) mounted in the housing, about which it is capable of pivoting from a safety position in which a notch formed on the safety hook member (38) traps the cradle (12) in a slot (44) formed in the limb portions of said enclosing cover structure, towards its inoperative position in which said cradle is free to move out of said slot (44), said safety hook member being provided with a return spring (90) urging it permanently towards said safety position, characterised in that said retaining means (102—104) are formed on the one hand (104) on said safety hook member (38) and on the other hand (102) on said pawl (46).

4. A device according to claim 3 in combination with claim 2 characterised in that said retractible stop means comprise a first lug (102) formed on said pawl (46) and a second lug (104) formed on said safety hook member (38), said first lug (102) co-operating with said second lug (104) formed on the safety hook member (38) to prevent any pivotal movement of the latter towards its safety position when it is in said inoperative position and said cradle is in the freed position.

5. A device according to claim 4 characterised in that said first lug (102) on said pawl is displaced over a first circular trajectory $(C_1)$ from a locked position in which said complementary recesses (52, 54) co-operate with each other towards an unlocked position wherein said recesses no longer co-operate and wherein said retaining hook member (36) is free to pivot about its spindle, said second lug (104) being displaced over a second circular trajectory $(C_2)$ from a safety position corresponding to said safety, position of the safety hook member towards an inoperative position corresponding to said inoperative position of the safety hook member, said first lug (102) being disposed on said second trajectory $(C_2)$ when the pawl (46) occupies said unlocked position.

6. A device according to claim 5, characterised in that said pawl (46) is capable of pivoting about its spindle (48) against the force applied by said pawl spring (58) to permit retraction fo the first lug (102) by said second lug (104) upon pivotal movement of said safety hook member (38) from said safety position towards said inoperative position.

FIG.1

FIG.2

FIG.3